# EUROPEAN PATENT APPLICATION

(11) **EP 4 484 387 A1**
(43) Date of publication of application: **01.01.2025**
(21) Application number: 23759777.8
(22) Date of filing: 14.02.2023
(51) Int. Cl.: C03B 37/012

(54) **OPTICAL FIBER PREFORM**

(30) Priority: 22.02.2022 JP 2022025998
(71) Applicant: Fujikura Ltd., Tokyo 135-8512 (JP)
(72) Inventor: KAJIKAWA, Shota, Sakura-shi, Chiba 285-8550 (JP)
(74) Representative: Hoffmann Eitle
(86) International application number: PCT/JP2023/004929
(87) International publication number: WO 2023/162775

(57) **Abstract**

An optical fiber preform (1P) includes: a clad rod (20R) having a hole (25) extending along a longitudinal direction with both ends being opened, and including a clad glass body (20P) that constitutes at least a part of a clad (20) in an optical fiber (1); and a core rod (10R) including a core glass body (10P) that constitutes a core (10) in the optical fiber (1), the core rod (10R) being held in the hole (25). The hole (25) has a diameter that increases from one end side toward the other end side.

## Description

### Technical Field

The present invention relates to an optical fiber preform.

### Background Art

As a method for manufacturing an optical fiber preform for manufacturing an optical fiber, for example, a hole opening method has been known, and the hole opening method is disclosed in Patent Literature 1 below. In the hole opening method, a through hole is provided in a clad rod that constitutes a clad using a drill or the like, and a core rod that constitutes a core is inserted into the through hole, thereby manufacturing an optical fiber preform. The optical fiber preform is drawn for use in obtaining an optical fiber, after being subjected to fusing processing in which both end portions thereof are fused to form sealing portions at both end portions of the clad rod, the sealing portions being welded to the core rod to close the ends of the through hole.

[Patent Literature 1] JP 2019-031427 A

### Summary of Invention

In the fusing processing of the optical fiber preform, for example, the end portions are fused while rotating the optical fiber preform about the central axis of the clad rod in a state where the central axis of the clad rod is substantially horizontal. In addition, a glass rod or the like may be welded to an end surface of the clad rod before the fusing processing, and the welding may be performed while rotating the optical fiber preform about the central axis of the clad rod. When the optical fiber preform is rotated as described above, the core rod held in the through hole may move in the longitudinal direction with respect to the clad rod. In the optical fiber preform in which the through hole of the clad rod is not inclined in the longitudinal direction of the optical fiber preform, in a case where the core rod exists in an inclined state in the through hole of the clad rod, if the core rod moves in this state, an end portion on one side of the core rod may protrude from the through hole of the clad rod. In this case, the fused position on the side opposite to the side where the core rod protrudes in the optical fiber preform is shifted to the side where the core rod protrudes in accordance with the movement of the core rod, and the length of the optical fiber preform after the fusing processing is shortened. In order to prevent the core rod from protruding from the through hole before the fusing processing, for example, it is conceivable to close the openings at both ends of the through hole, but the number of processing steps increases and the processing efficiency decreases. Therefore, there is a demand for realizing an optical fiber preform capable of efficiently producing an optical fiber by suppressing a decrease in processing efficiency.

When the optical fiber preform subjected to the fusing processing is drawn from one end portion thereof, the clad rod and the core rod are melted to form a tapered melted portion at one end portion, and one end side of the hole of the clad rod is closed by the melted portion. As the drawing progresses, the optical fiber preform becomes shorter from one end side, and the space between the clad rod and the core rod, which is a space in the hole, becomes smaller. When the space becomes smaller, the pressure of the gas in the space increases, and a manufactured optical fiber is likely to include bubbles. Therefore, there is also a demand for realizing an optical fiber preform capable of efficiently producing an optical fiber by suppressing the optical fiber from including bubbles.

Therefore, an object of the present invention is to provide an optical fiber preform capable of efficiently producing an optical fiber.

In order to achieve the aforementioned object, a first aspect of the present invention is an optical fiber preform including: a clad rod having a hole extending along a longitudinal direction with both ends being opened, and including a clad glass body that constitutes at least a part of a clad in an optical fiber; and a glass rod including a predetermined glass body that constitutes a predetermined portion different from the clad in the optical fiber, the glass rod being held in the hole, in which the hole has a diameter that increases from one end side toward the other end side.

The optical fiber preform according to the first aspect is drawn after being subjected to fusing processing. In the optical fiber preform according to the first aspect, the diameter of the hole increases from one end side toward the other end side. For this reason, when the optical fiber preform is rotated about the center axis of the clad rod in a state where the center axis of the clad rod is substantially horizontal, the glass rod may be inclined downward from one end side toward the other end side by its own weight. As a result, during such rotation, a force directed from one end side to the other end side may be applied to the glass rod. In the optical fiber preform according to the first aspect, the direction in which the glass rod protrudes from the hole of the clad rod can be specified as the other end side. Therefore, even if the openings at both ends of the hole are not closed before fusing processing, when one on the other end side of the openings of the hole is at least partially closed by a closing member or the like, the closing member can close the glass rod. By doing so, it is possible to suppress the glass rod from protruding from the hole of the clad rod, and it is possible to suppress a decrease in processing efficiency as compared with the case where the openings at both ends of the hole are closed before fusing processing, thereby realizing an optical fiber preform capable of efficiently producing an optical fiber.

In order to achieve the aforementioned object, a second aspect of the present invention is an optical fiber preform including: a clad rod having a hole extending along a longitudinal direction, and including a clad glass body that constitutes at least a part of a clad in an optical fiber; and a glass rod including a predetermined glass body that constitutes a predetermined portion different from the clad in the optical fiber, the glass rod being held in the hole, in which the hole has a diameter that increases from one end side toward the other end side, and the clad rod includes a first sealing portion welded to the glass rod at an end portion on the other end side thereof to close an end on the other end side of the hole, and a second sealing portion welded to the glass rod at an end portion on the one end side to close an end on the one end side of the hole.

When the optical fiber preform according to the second aspect is drawn from the end portion on the second sealing portion side, a tapered melted portion is formed at the end portion on the second sealing portion side, and the melted portion approaches the first sealing portion side as the drawing progresses. In the optical fiber preform according to the second aspect, the size of the hole increases from the second sealing portion side toward the first sealing portion side. Therefore, by drawing the optical fiber preform according to the second aspect from the end portion on the second sealing portion side, it is possible to increase the space between the clad rod and the glass rod in a state where drawing has progressed without increasing the minimum diameter of the hole as compared with the case where the diameter of the hole is constant in the longitudinal direction. Therefore, the optical fiber preform according to the second aspect is capable of suppressing a positional deviation of the predetermined portion, and reducing a gas pressure increase in the space in a state where the drawing has progressed, making it possible to suppress an optical fiber from including bubbles, as compared with the above-described case. Therefore, the optical fiber preform according to the second aspect can be realized as an optical fiber preform capable of efficiently producing an optical fiber.

A third aspect of the present invention is the optical fiber preform according to the first or second aspect, in which the diameter of the hole increases from the one end side toward the other end side in a stepwise manner. A fourth aspect of the present invention is the optical fiber preform according to the first or second aspect, in which the diameter of the hole gradually increases from the one end side toward the other end side.

A fifth aspect of the present invention is the optical fiber preform according to any one of the first to fourth aspects, in which a plurality of glass rods are provided, and a plurality of holes in which the plurality of glass rods are individually held are provided in the clad rod. By adopting such a configuration in a case where the above-described predetermined glass body is a core glass body, a multi-core fiber can be manufactured.

As described above, according to the present invention, it is possible to provide an optical fiber preform capable of efficiently producing an optical fiber.

### Brief Description of Drawings

FIG. 1 is a cross-sectional view perpendicular to a longitudinal direction of an optical fiber manufactured by an optical fiber preform according to an embodiment of the present invention.
FIG. 2 is a cross-sectional view in a longitudinal direction of an optical fiber preform for manufacturing the optical fiber illustrated in FIG. 1.
FIG. 3 is a cross-sectional view perpendicular to the longitudinal direction of the optical fiber preform illustrated in FIG. 2.
FIG. 4 is a view illustrating a state in which the optical fiber preform illustrated in FIG. 2 is subjected to fusing processing.
FIG. 5 is a flowchart illustrating processes in a method for manufacturing the optical fiber including a method for manufacturing the optical fiber preform according to the present embodiment.
FIG. 6 is a view illustrating a state of a dummy glass tube welding process.
FIG. 7 is a view illustrating a state of an etching process.
FIG. 8 is a view illustrating a state after an insertion process.
FIG. 9 is a view illustrating a state of a closing process.
FIG. 10 is a view illustrating a state of a first fusing process.
FIG. 11 is a view illustrating a state after the first fusing process.
FIG. 12 is a view illustrating a state of a second fusing process.
FIG. 13 is a view illustrating a state of a drawing process.
FIG. 14 is a view illustrating an optical fiber preform according to a modification, similarly to FIG. 2.
FIG. 15 is a view illustrating a state in which the optical fiber preform illustrated in FIG. 14 is subjected to fusing processing, similarly to FIG. 4.

### Description of Embodiments

Hereinafter, modes for carrying out an optical fiber preform according to the present invention will be exemplified together with the accompanying drawings. The embodiments exemplified below are provided to facilitate understanding of the present invention, and are not intended to limit the present invention. The present invention can be modified and improved from the following embodiments without departing from the gist thereof. In addition, in the present specification, dimensions of members may be exaggerated for easy understanding.

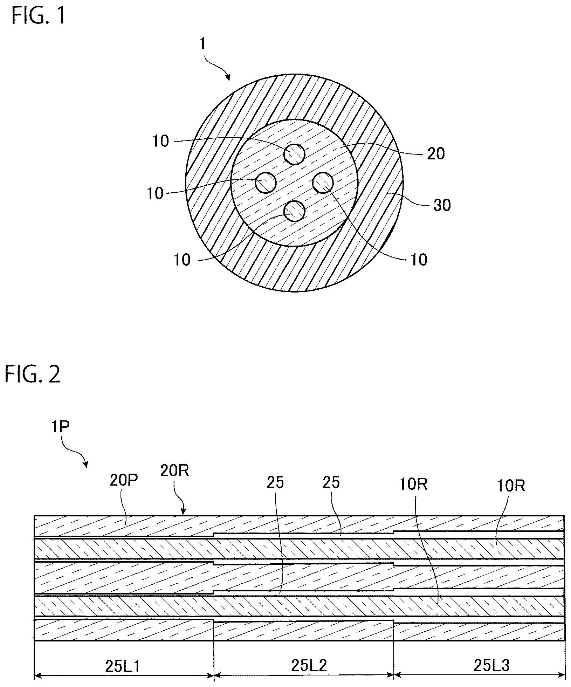

FIG. 1 is a cross-sectional view perpendicular to a longitudinal direction of an optical fiber manufactured by an optical fiber preform according to an embodiment of the present invention. As illustrated in FIG. 1, the optical fiber 1 according to the present embodiment is a multi-core fiber, and mainly includes a plurality of cores 10, a clad 20 surrounding an outer peripheral surface of each of the cores 10, and a coating layer 30 coating an outer peripheral surface of the clad 20. In the present embodiment, the number of cores 10 is four, and the cores 10 are arranged at substantially equal intervals on a circumference with the central axis of the optical fiber 1 being the center thereof. In addition, the outer shape of the core 10 and the outer shape of the clad 20 in the cross section perpendicular to the longitudinal direction of the optical fiber are circular, but these outer shapes may be non-circular such as elliptical. In addition, the number of cores 10 is not particularly limited, and for example, the optical fiber 1 may be a single-core fiber having one core 10.

The core 10 has a higher refractive index than the clad 20. In the present embodiment, the core 10 is made of silica glass to which a dopant that increases the refractive index, such as germanium, is added, and the clad 20 is made of silica glass without any additive. Note that the core 10 may be made of silica glass without any additive, and the clad 20 may be made of silica glass to which a dopant that decreases the refractive index, such as fluorine (F), is added, and the dopant that changes the refractive index is not particularly limited.

The coating layer 30 is made of, for example, a resin such as a thermosetting resin or an ultraviolet curable resin.

FIG. 2 is a cross-sectional view in a longitudinal direction of an optical fiber preform for manufacturing the optical fiber 1 illustrated in FIG. 1. As illustrated in FIG. 2, the optical fiber preform 1P is a rod assembly including a plurality of glass rods, and mainly includes core rods 10R and a clad rod 20R including a clad glass body 20P that constitutes at least a part of the clad 20 of the optical fiber 1 in the present embodiment. The number of core rods 10R is 4, which is the same as the number of cores 10 of the optical fiber 1.

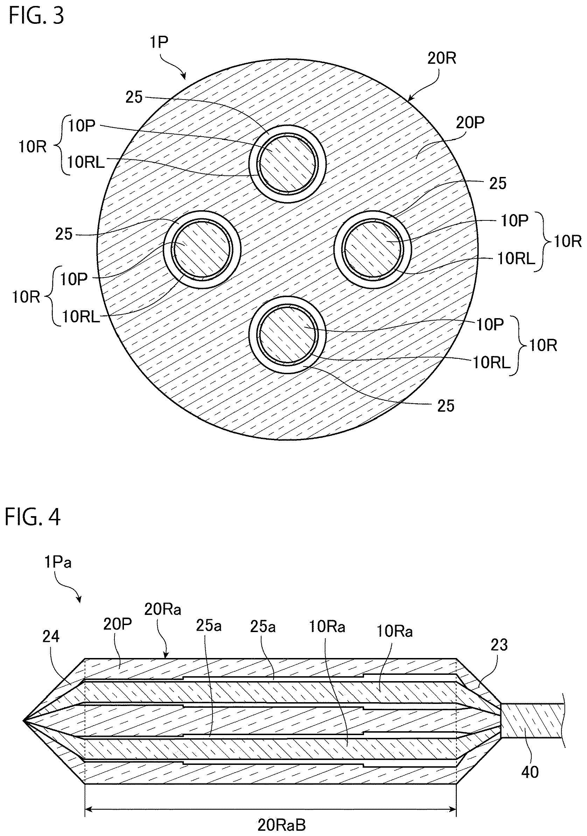

FIG. 3 is a cross-sectional view perpendicular to the longitudinal direction of the optical fiber preform 1P illustrated in FIG. 2. As illustrated in FIG. 3, the core rods 10R have the same configuration, each including a rod-shaped core glass body 10P that constitutes the core 10 as a predetermined portion different from the clad 20 in the optical fiber 1. The core rod 10R according to the present embodiment is a glass rod in which an outer peripheral surface of the core glass body 10P is coated with a coating layer 10RL made of the same glass body as the clad glass body 20P, and the diameter of the core rod 10R is substantially constant in the longitudinal direction.

As illustrated in FIGS. 2 and 3, the clad rod 20R according to the present embodiment is made of the clad glass body 20P. The outer shape of the cross section of the clad rod 20R is circular, and the outer diameter of the clad rod 20R is substantially constant in the longitudinal direction. The length of the clad rod 20R is substantially the same as the length of the core rod 10R. The clad rod 20R has four holes 25 extending along the longitudinal direction, and these holes 25 correspond to the four core rods 10R on a one-to-one basis. Therefore, in a case where the number of core rods 10R is one, the number of holes 25 provided in the clad rod 20R is one. These holes 25 are through holes whose both ends are opened to both end surfaces of the clad rod 20R.

The core rod 10R is held in each of the holes 25. In the present embodiment, an end portion on one end side of the clad rod 20R surrounds an end portion on one end side of the core rod 10R, and an end portion on the other end side of the clad rod 20R surrounds an end portion on the other end side of the core rod 10R. Hereinafter, the end portion on one end side may be referred to as one end portion, and the end portion on the other end side may be referred to as the other end portion. The position of the hole 25 with respect to the central axis of the clad rod 20R is substantially similar to the position of the core 10 with respect to the central axis of the optical fiber 1. In addition, the diameter of each hole 25 increases from one end side toward the other end side, and in the present embodiment, the diameter of each hole 25 increases stepwise. The number of diameter change stages is not limited, and it is illustrated in FIG. 2 as an example that the diameter increases in two stages.

Such an optical fiber preform 1P is used after being subjected to fusing processing in which both end portions are fused to form sealing portions for closing the ends of the hole 25 at both end portions of the clad rod 20R.

Next, the optical fiber preform subjected to fusing processing will be described.

FIG. 4 is a view illustrating a state in which the optical fiber preform 1P illustrated in FIG. 2 is subjected to fusing processing, and is a cross-sectional view in the longitudinal direction of the optical fiber preform subjected to fusing processing. In the following description, in order to make it easy to distinguish the optical fiber preform 1Pa after the fusing processing and the optical fiber preform 1P before the fusing processing, the optical fiber preform 1P before the fusing processing will be referred to as a rod assembly.

As illustrated in FIG. 4, similarly to the rod assembly 1P, the optical fiber preform 1Pa includes four core rods 10Ra and a clad rod 20Ra.

The core rod 10Ra is mainly different from the core rod 10R of the rod assembly 1P in that the length is shortened, and is a part of the core rod 10R of the rod assembly 1P.

The clad rod 20Ra is mainly different from the clad rod 20R of the rod assembly 1P in that the length is shortened, and a first sealing portion 23, a second sealing portion 24, and a main body portion 20RaB are included. The clad rod 20Ra has four holes 25a extending along the longitudinal direction, and each of the holes 25a is a part of the hole 25 of the clad rod 20R of the rod assembly 1P. The core rod 10Ra is held in each of the holes 25a. In addition, the diameter of each hole 25a increases from one end side toward the other end side, and in the present embodiment, the diameter of each hole 25a increases stepwise, and the number of change stages is two.

The clad rod 20Ra has a first sealing portion 23 at the other end portion on the side where the diameter of the hole 25a is large, and has a second sealing portion 24 at one end portion on the side where the diameter of the hole 25a is small, and the main body portion 20RaB is a portion between the first sealing portion 23 and the second sealing portion 24. The outer shape of the cross section of the main body portion 20RaB is circular, and the outer diameter of the main body portion 20RaB is substantially constant in the longitudinal direction.

The first sealing portion 23 is formed in a tapered shape in which the outer diameter thereof decreases from one end side toward the other end side, and is welded to the other end portion of each core rod 10Ra while surrounding the other end portion of each core rod 10Ra to close the end on the other end side of each hole 25a, and the core rod 10Ra is connected to the first sealing portion 23. A portion of the core rod 10Ra surrounded by the first sealing portion 23 is formed in a tapered shape in which the outer diameter thereof decreases from one end side toward the other end side. One end of a support rod 40 made of silica glass is welded to a tip portion of the first sealing portion 23, and the central axis of the support rod 40 and the central axis of the clad rod 20Ra substantially coincide with each other.

The second sealing portion 24 is formed in a tapered shape in which the outer diameter thereof decreases from the other end side toward the one end side, and is welded to one end portion of each core rod 10Ra while surrounding one end portion of each core rod 10Ra to close the end on one end side of each hole 25a, and the core rod 10Ra is connected to the second sealing portion 24. A portion of the core rod 10Ra surrounded by the second sealing portion 24 is formed in a tapered shape in which the outer diameter thereof decreases from the other end side toward one end side. In this manner, both ends of each hole 25a are closed by the first sealing portion 23 and the second sealing portion 24, and the inside of each hole 25a is a closed space. The pressure in the space between the clad rod 20Ra and the core rod 10Ra, which is the space inside the hole 25a, is lower than the atmospheric pressure, and is, for example, about 10⁻⁵ Pa to 10⁻⁸ Pa.

Next, a method for manufacturing the optical fiber preform 1Pa and a method for manufacturing the optical fiber 1 will be described.

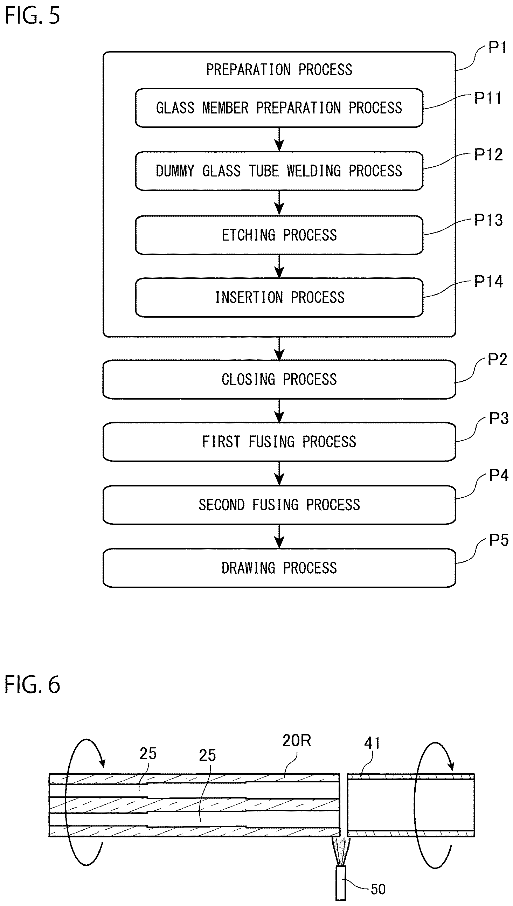

FIG. 5 is a flowchart illustrating processes in a method for manufacturing the optical fiber 1 including a method for manufacturing the optical fiber preform 1Pa according to the present embodiment. As illustrated in FIG. 5, the method for manufacturing the optical fiber preform 1Pa according to the present embodiment includes a preparation process P1, a closing process P2, a first fusing process P3, and a second fusing process P4. The method for manufacturing the optical fiber 1 includes a drawing process P5 of drawing the manufactured optical fiber preform 1Pa.

### <Preparation Process P1>

This process is a process of preparing the rod assembly 1P illustrated in FIG. 2. This process according to the present embodiment includes a glass member preparation process P11, a dummy glass tube welding process P12, an etching process P13, and an insertion process P14.

### <Glass Member Preparation Process P11>

This process is a process of preparing a plurality of glass members. The plurality of glass members prepared in the present embodiment are four core rods 10R and a clad rod 20R included in the rod assembly 1P. These members may be washed in advance using pure water, ethanol, hydrofluoric acid, or the like.

### <Dummy Glass Tube Welding Process P12>

This process is a process of welding a dummy glass tube to each of both end surfaces of the clad rod 20R prepared in the preparation process P1. The dummy glass tube according to the present embodiment is a cylindrical tube made of silica glass and having an outer diameter that is substantially the same as the outer diameter of the clad rod 20R. In the following description, the dummy glass tube welded to an end surface on the other end side, which is a side where the diameter of the hole 25 of the clad rod 20R is large, will be referred to as a first glass tube, and the dummy glass tube welded to an end surface on one end side, which is a side where the diameter of the hole 25 of the clad rod 20R is small, will be referred to as a second glass tube.

FIG. 6 is a view illustrating a state of this process. The other end portion of the clad rod 20R is heated by an oxyhydrogen burner while the clad rod 20R is rotated about the central axis by a lathe (not illustrated) in a state where the central axis of the clad rod 20R is substantially horizontal. Next, a first glass tube 41 disposed such that one end surface thereof faces the end surface on the other end side of the clad rod 20R with a predetermined interval is rotated around the central axis of the first glass tube 41 by the lathe (not illustrated). The rotation of the clad rod 20R and the rotation of the first glass tube 41 are synchronized, and in this state, the other end portion of the clad rod 20R and the end portion of the first glass tube 41 facing the clad rod 20R are heated by an oxyhydrogen burner 50. Next, one end surface of the first glass tube 41 is brought into abutment against the end surface on the other end side of the clad rod 20R, and the first glass tube 41 is welded to the end surface on the other end side of the clad rod 20R such that the clad rod 20R and the first glass tube 41 are substantially coaxial. Similarly to the first glass tube 41, a second glass tube is welded to the end surface on one end side of the clad rod 20R. In a state where the first glass tube 41 and the second glass tube are welded, an end on the other end side of each hole 25 of the clad rod 20R is opened to an internal space of the first glass tube 41, and an end on one end side of each hole 25 of the clad rod 20R is opened to an internal space of the second glass tube.

### <Etching Process P13>

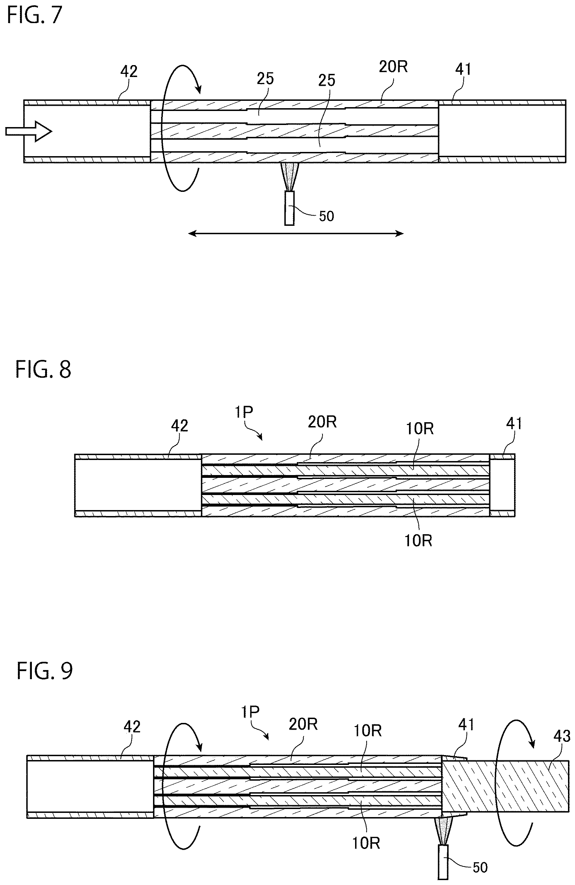

This process is a process of etching an inner peripheral surface defining each hole 25 in the clad rod 20R. FIG. 7 is a view illustrating a state of this process. In the present embodiment, an etching gas such as a sulfur hexafluoride (SF6) gas flows from the second glass tube 42 into the hole 25 of the clad rod 20R to which the glass tubes 41 and 42 are welded, while the clad rod 20R is rotated about the central axis by the lathe (not illustrated) in a state where the central axis is substantially horizontal. At this time, the oxyhydrogen burner 50 traverses along the longitudinal direction of the clad rod 20R to heat the clad rod 20R. In this manner, the inner peripheral surface defining the hole 25 is etched. The etching method is not particularly limited, and for example, etching may be performed with an etching solution such as hydrofluoric acid (HF) .

### <Insertion Process P14>

This process is a process of inserting the core rods 10R prepared in the glass member preparation process P11 into the holes 25 of the clad rod 20R. FIG. 8 is a view illustrating a state after this process. In the present embodiment, first, a part of the first glass tube 41 is fused using the oxyhydrogen burner 50 to shorten the first glass tube 41. Next, each core rod 10R is inserted into the hole 25 corresponding to the core rod 10R. In the present embodiment, the core rod 10R is inserted into the hole 25 such that the other end portion of the core rod 10R is surrounded by the other end portion of the clad rod 20R. Then, the rod assembly 1P illustrated in FIG. 2 is obtained. In the rod assembly 1P, the first glass tube 41 and the second glass tube 42 are welded to the clad rod 20R. In addition, since the length of the clad rod 20R and the length of the core rod 10R are substantially the same, one end portion of the core rod 10R is surrounded by one end portion of the clad rod 20R.

### <Closing Process P2>

This process is a process of attaching a closing member to the end surface on the other end side of the clad rod 20R to at least partially close the opening on the other end side of the hole 25. FIG. 9 is a view illustrating a state of this process. In the present embodiment, the closing member is a cylindrical dummy rod 43 made of silica glass, and the diameter of the dummy rod 43 is smaller than the inner diameter of the first glass tube 41. As illustrated in FIG. 9, the dummy rod 43 is inserted into the internal space of the first glass tube 41 such that one end surface of the dummy rod 43 comes into contact with the end surface on the other end side of the clad rod 20R. The central axis of the clad rod 20R and the central axis of the dummy rod 43 substantially coincide with each other. In this state, in the present embodiment, the opening on the other end side of each hole 25 is entirely covered with the dummy rod 43. Next, the other end portion of the rod assembly 1P, the end portion of the dummy rod 43 facing the rod assembly 1P, and the first glass tube 41 are heated by the oxyhydrogen burner 50 while the rod assembly 1P and the dummy rod 43 are synchronously rotated about the central axis by the lathe (not illustrated) in a state where the central axis is substantially horizontal. Then, the first glass tube 41 is welded to the dummy rod 43, and the dummy rod 43 is welded to the other end of the rod assembly 1P. In this way, the dummy rod 43 is attached to the end surface on the other end side of the clad rod 20R, and as a result, in the present embodiment, the opening on the other end side of each hole 25 of the clad rod 20R is entirely closed by the dummy rod 43 and the first glass tube 41.

### <First Fusing Process P3>

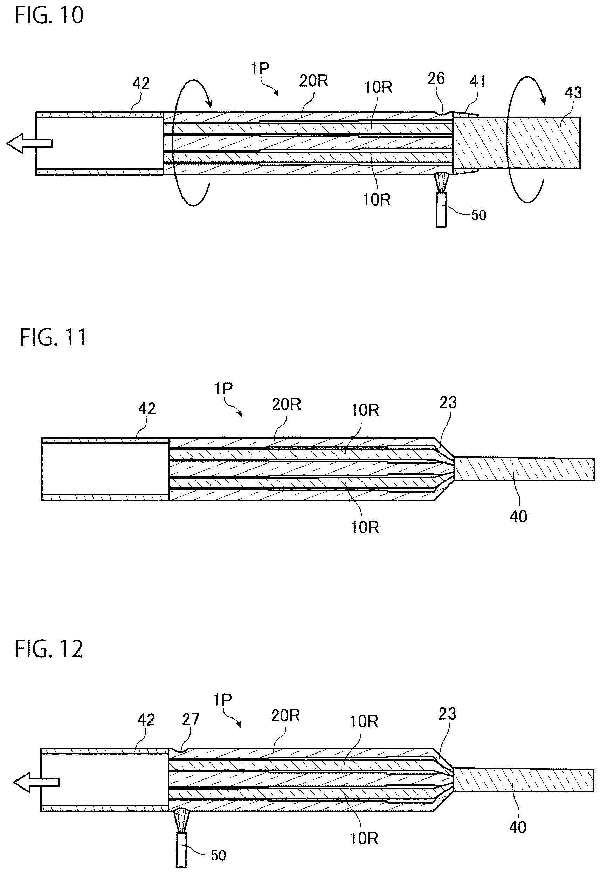

This process is a process of fusing the other end portion of the rod assembly 1P to form a first sealing portion 23 that closes the other end side of the hole 25 at the other end portion of the clad rod 20R. FIG. 10 is a view illustrating a state of this process, and FIG. 11 is a view illustrating a state after this process. As illustrated in FIG. 10, while the inside of each hole 25 of the clad rod 20R of the rod assembly 1P is evacuated by a vacuum pump (not illustrated) connected to the second glass tube 42, the rod assembly 1P is rotated about the central axis of the clad rod 20R by the lathe (not illustrated) in a state where the central axis of the clad rod 20R is substantially horizontal. In this state, the other end portion of the rod assembly 1P is heated by the oxyhydrogen burner 50 to evaporate the other end portion of the clad rod 20R from the outer peripheral surface side and form a constricted portion 26 having a reduced outer diameter at the other end portion of the clad rod 20R. Then, the second glass tube 42 and the dummy rod 43 are moved to be relatively away in the longitudinal direction, and the other end portion of the rod assembly 1P is fused with the constricted portion 26 as a starting point to form a first sealing portion 23 as illustrated in FIG. 11. In the present embodiment, since the other end portion of the clad rod 20R surrounds the other end portion of the core rod 10R, the core rod 10R is positioned at the fused other end portion of the rod assembly 1P, and the formed first sealing portion 23 is welded to the core rod 10R. Then, one end of the support rod 40 is welded to a tip of the first sealing portion 23.

### <Second Fusing Process P4>

This process is a process of fusing one end portion of the rod assembly 1P to form a second sealing portion 24 that closes one end side of the hole 25 at one end portion of the clad rod 20R. FIG. 12 is a view illustrating a state of this process. As illustrated in FIG. 12, similarly to the first fusing process P3, the rod assembly 1P is rotated by the lathe (not illustrated) while the inside of each hole 25 is evacuated by the vacuum pump (not illustrated). In this state, one end portion of the rod assembly 1P is heated by the oxyhydrogen burner 50 to form a constricted portion 27 having a reduced outer diameter at one end portion of the clad rod 20R. Then, the second glass tube 42 and the support rod 40 are moved to be relatively away in the longitudinal direction, and one end portion of the rod assembly 1P is fused with the constricted portion 27 as a starting point to form a second sealing portion 24. In the present embodiment, since one end portion of the clad rod 20R surrounds one end portion of the core rod 10R, the formed second sealing portion 24 is welded to the core rod 10R.

As the second sealing portion 24 is formed in this manner, the clad rod 20R of the rod assembly 1P becomes the clad rod 20Ra of the optical fiber preform 1Pa, the hole 25 of the clad rod 20R of the rod assembly 1P becomes the hole 25a of the clad rod 20Ra of the optical fiber preform 1Pa, and the core rod 10R of the rod assembly 1P becomes the core rod 10Ra of the optical fiber preform 1Pa, thereby obtaining the optical fiber preform 1Pa illustrated in FIG. 4.

### <Drawing Process P5>

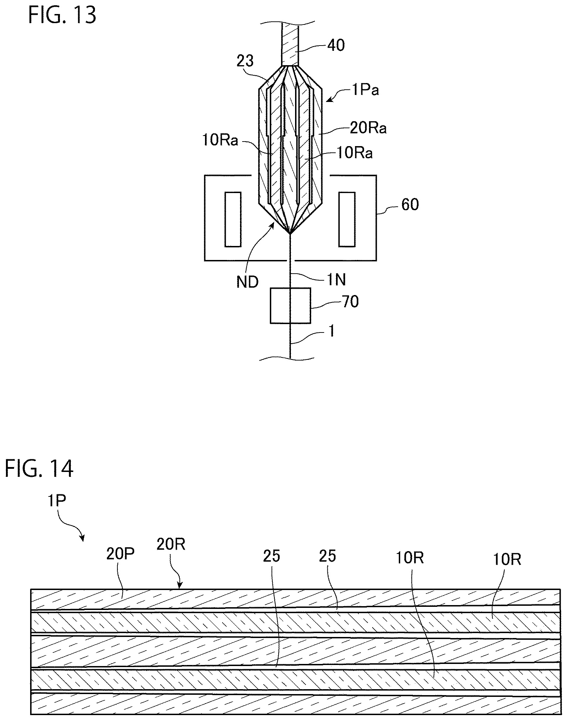

This process is a process of drawing the optical fiber preform 1Pa to obtain an optical fiber 1. FIG. 13 is a view illustrating a state of this process. As illustrated in FIG. 13, in this process, an end portion of the optical fiber preform 1Pa on the side opposite to the first sealing portion 23 side is heated by a spinning furnace 60 to form a tapered melted portion ND in which the clad rod 20Ra and the core rod 10Ra are melted and integrated at the heated end portion, and glass is drawn from a tip of the melted portion ND. The melted portion ND closes an end of the hole 25a of the clad rod 20Ra on the side opposite to the first sealing portion 23 side. The glass drawn from the melted portion ND is immediately solidified, and the core glass body 10P becomes the core 10 and the clad glass body 20P becomes the clad 20, thereby obtaining an optical fiber bare wire 1N including the core 10 and the clad 20. A coating layer 30 is provided on an outer peripheral surface of the optical fiber bare wire 1N by a coating device 70, thereby obtaining the optical fiber 1 illustrated in FIG. 1.

As described above, the rod assembly 1P, which is an optical fiber preform according to the present embodiment, includes a clad rod 20R and a core rod 10R as a glass rod. The clad rod 20R has a hole 25 extending along a longitudinal direction with both ends thereof being opened, and the core rod 10R is held in the hole 25. The hole 25 of the clad rod 20R has a diameter that increases from one end side toward the other end side. For this reason, when the rod assembly 1P is rotated about the center axis of the clad rod 20R in a state where the center axis of the clad rod 20R is substantially horizontal, the core rod 10R may be inclined downward from one end side toward the other end side by its own weight. As a result, during such rotation, a force directed from one end side to the other end side may be applied to the core rod 10R. In the rod assembly 1P according to the present embodiment, the direction in which the core rod 10R protrudes from the hole 25 of the clad rod 20R can be specified as the other end side. Therefore, as in the closing process P2 and the first fusing process P3 described above, even if the openings at both ends of the hole 25 are not closed before fusing processing, when one on the other end side of the openings of the hole 25 is closed, the closing member can close the core rod 10R. By doing so, it is possible to suppress the core rod 10R from protruding from the hole 25, and it is possible to suppress a decrease in processing efficiency as compared with the case where the openings at both ends are closed before fusing processing, thereby realizing a rod assembly 1P capable of efficiently producing an optical fiber 1. In the closing process P2 and the first fusing process P3 described above, the opening on the other end side of the hole 25 is entirely closed. However, from the viewpoint of suppressing the core rod 10R from protruding from the hole 25, the opening on the other end side of the hole 25 may be at least partially closed.

An inclination angle of the core rod 10R with respect to the central axis of the clad rod 20R in a state where the central axis of the clad rod 20R is horizontal is preferably, for example, 0° or more and 0.1° or less. Further, in the present embodiment, the diameter of the hole 25 increases from one end side toward the other end side in a stepwise manner, but lengths 25L1, 25L2, and 25L3 of portions each having a constant diameter in the hole 25 are preferably, for example, 200 mm or more and 2000 mm or less. In FIG. 2, the number of portions each having a constant diameter in the hole 25 is three, but the number of portions each having a constant diameter in the hole 25 is not limited to three in the present embodiment. In addition, in a case where the hole 25 becomes larger in the stepwise manner as described above, a diameter increase amount of the hole 25 at the portion where the diameter of the hole 25 increases is preferably, for example, 0.01 mm or more and 5 mm or less.

In addition, the optical fiber preform 1Pa according to the present embodiment includes a clad rod 20Ra and a core rod 10Ra as a glass rod. The clad rod 20Ra has a hole 25a extending along a longitudinal direction, and the core rod 10Ra is held in the hole 25a. The hole 25a has a diameter that increases from one end side toward the other end side. The clad rod 20Ra has a first sealing portion 23 that closes an end on the other end side of the hole 25a at an end portion on the other end side thereof, and a second sealing portion 24 that is welded to the core rod 10Ra at an end portion on one end side thereof to close an end on one end side of the hole 25a. When the optical fiber preform 1Pa according to the present embodiment is drawn from the end portion on the second sealing portion 24 side, a melted portion ND is formed at the end portion on the second sealing portion 24 side as illustrated in FIG. 13. The melted portion ND closes the other end side of the hole 25a, and approaches the first sealing portion 23 side as the drawing progresses. In the optical fiber preform 1Pa according to the present embodiment, the size of the hole 25a increases from the second sealing portion 24 side toward the first sealing portion 23 side. Therefore, by drawing the optical fiber preform 1Pa according to the present embodiment from the end portion on the second sealing portion 24 side, it is possible to increase the space between the clad rod 20Ra and the core rod 10R in a state where drawing has progressed without increasing the minimum diameter of the hole 25a as compared with the case where the diameter of the hole 25a is constant in the longitudinal direction. Therefore, the optical fiber preform 1Pa according to the present embodiment is capable of suppressing a positional deviation of the core 10 as a predetermined portion, and reducing a gas pressure increase in the space in a state where the drawing has progressed, making it possible to suppress an optical fiber 1 from including bubbles, as compared with the above-described case. Therefore, the optical fiber preform 1Pa according to the present embodiment is capable of efficiently producing an optical fiber 1.

In the optical fiber preform 1Pa according to the present embodiment, the first sealing portion 23 is welded to the core rod 10Ra. If the optical fiber preform 1Pa is drawn from the end portion on the second sealing portion 24 side in a case where the first sealing portion 23 is not welded to the core rod 10Ra, the distance between the end on the first sealing portion 23 side of the core rod 10Ra and the first sealing portion 23 may vary during the drawing. In this case, the drawn amount of the core glass body 10P per unit time varies, and the diameter of the core 10 of the optical fiber 1 varies in the longitudinal direction. However, the optical fiber preform 1Pa according to the present embodiment is capable of suppressing the diameter of the core 10 from varying in the longitudinal direction as compared with the above-described case.

In the optical fiber preform 1Pa according to the present embodiment, the pressure in the hole 25a is lower than the atmospheric pressure. Therefore, the optical fiber preform 1Pa according to the present embodiment is capable of reducing the pressure in the space between the clad rod 20Ra and the core rod 10Ra in a state where the drawing has progressed, making it possible to suppress an optical fiber 1 from including bubbles, as compared with the case where the pressure in the hole 25a is equal to or higher than the atmospheric pressure. Note that the pressure in the hole 25a may be equal to or higher than the atmospheric pressure.

In each of the rod assembly 1P and the optical fiber preform 1Pa according to the present embodiment, a plurality of core rods 10R or 10Ra are provided, and a plurality of holes 25 or 25a in which the plurality of core rods 10R or 10Ra are individually held are provided in the clad rod 20R or 20Ra. Therefore, as described above, the rod assembly 1P and the optical fiber preform 1Pa according to the present embodiment is capable of manufacture an optical fiber 1 that is a multi-core fiber.

The method for manufacturing the optical fiber preform 1Pa according to the present embodiment includes a preparation process P1 and a first fusing process P3. In the preparation process P1, a rod assembly 1P is prepared. In the first fusing process P3, when the rod assembly 1P is rotated about the center axis of the clad rod 20R in a state where the opening on the other end side of the hole 25 is at least partially closed and the center axis of the clad rod 20R is substantially horizontal, the end portion on the other end side of the rod assembly 1P is heated and fused. In the manufacturing method according to the present embodiment, since the diameter of the hole 25 of the clad rod 20R increases from one end side toward the other end side, even if the opening on one end side of the hole 25 is not closed in the first fusing process P3, the core rod 10R can be suppressed from protruding from the hole 25. Therefore, the manufacturing method according to the present embodiment is capable of suppressing a decrease in processing efficiency as compared with the case where the openings at both ends of the hole 25 are closed in the first fusing process P3.

Although the present invention has been described by taking the above-described embodiment as an example, the present invention is not limited thereto.

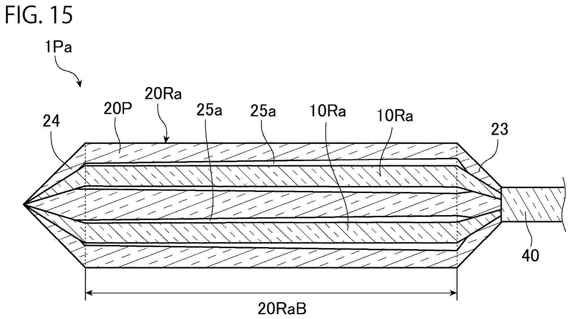

For example, in the embodiment described above, the clad rod 20R or 20Ra in which the diameter of the hole 25 or 25a increase from one end side toward the other end side in a stepwise manner have been described as an example. However, the diameter of the hole 25 or 25a only needs to increase from one end side toward the other end side. For example, as illustrated in FIGS. 14 and 15, the diameter of the hole 25 or 25a may gradually increase from one end side toward the other end side, and in this case, the inner peripheral surface defining the hole 25 or 25a is inclined from one end side toward the other end side in a direction opposite to the central axis side of the hole 25 or 25a. FIG. 14 is a view illustrating an optical fiber preform 1P according to a modification similarly to FIG. 2, and the optical fiber preform 1P illustrated in FIG. 14 is a rod assembly 1P before fusing processing. FIG. 15 is a view illustrating a state in which the optical fiber preform 1P illustrated in FIG. 14 is subjected to fusing processing, similarly to FIG. 4. In the rod assembly 1P according to the present modification, similarly to the above-described embodiment, when the rod assembly 1P is rotated about the central axis of the clad rod 20R in a state where the central axis of the clad rod 20R is substantially horizontal, the core rod 10R can be suppressed from protruding from the hole 25 by closing one on the other end side of the openings of the hole 25. In addition, the optical fiber preform 1Pa according to the present modification is capable of suppressing an optical fiber 1 from including bubbles, similarly to the above-described embodiment.

In the embodiment described above, the clad rod 20R or 20Ra constituted by the clad glass body 20P has been described as an example. However, the clad rod 20R or 20Ra only needs to include the clad glass body 20P, and may further include a predetermined glass body that constitutes a predetermined portion different from the clad 20 in the optical fiber 1. Examples of such a predetermined portion include a core 10, a marker, and a stress applying portion that applies stress to the core 10. In addition, the clad rod 20R may have an empty hole extending along the longitudinal direction with no glass rod being accommodated therein.

In the embodiment described above, the rod assembly 1P including the core rod 10R as a glass rod and the optical fiber preform 1Pa including the core rod 10Ra as a glass rod have been described as an example. However, the glass rod included in the rod assembly 1P or the optical fiber preform 1Pa only needs to be a glass rod including a predetermined glass body that constitutes a predetermined portion different from the clad 20 in the optical fiber 1. For example, the predetermined glass body included in the glass rod may be a glass body that constitutes a marker as the predetermined portion or a glass body that constitutes a stress applying portion as the predetermined portion. The glass rod may be a glass rod in which a core glass body that constitutes a core 10 is covered with a glass body that constitutes a low refractive index layer surrounding the core 10. In addition, when there are a plurality of glass rods, a predetermined glass body included in at least one of the plurality of glass rods may be different from a predetermined glass body included in at least one other glass rod of the plurality of glass rods.

In the embodiment described above, the oxyhydrogen burner 50 is used for heating the glass member. However, the heating device for heating the glass member is not particularly limited, and may be, for example, an electric furnace or the like. From the viewpoint of reducing processing waste, it is preferable that the rod assembly 1P is fused by the oxyhydrogen burner 50 in the first fusing process P3 and the second fusing process P4. In general, the heat spot of the oxyhydrogen burner is narrower than the heat spot of the electric furnace. Therefore, by using the oxyhydrogen burner, the sizes of the constricted portions 26 and 27 formed in the first fusing process P3 and the second fusing process P4 can be reduced, making it possible to reducing the lengths of the first sealing portion 23 and the second sealing portion 24 and reducing processing waste, as compared with the case where the electric furnace is used. The heating source may be light having a high absorptivity with respect to glass such as a CO2 laser. When the laser is used as a heat source, the heat spots can be arbitrarily distributed, making it possible to realize heating optimum for the size and material of the preform.

In the embodiment described above, the rod assembly 1P in which both end portions of the clad rod 20R surround the end portions of the core rod 10R has been described as an example. However, at least one of both ends of the clad rod 20R may not surround the core rod 10R. However, from the viewpoint of reducing processing waste, it is preferable that one end portion of the clad rod 20R surrounds one end portion of the core rod 10R, and the other end portion of the clad rod 20R surrounds the other end portion of the core rod 10R.

In the method for manufacturing the optical fiber preform 1Pa according to the embodiment described above, the preparation process P1 including the glass member preparation process P11, the dummy glass tube welding process P12, the etching process P13, and the insertion process P14 has been described as an example. However, the preparation process P1 is not particularly limited as long as the rod assembly 1P can be prepared. For example, in a case where a clad rod 20R of which an inner peripheral surface defining a hole 25 is etched is prepared, the etching process P13 may be omitted. In addition, the closing process P2 of entirely closing the opening on one end side of the hole 25 of the clad rod 20R with the dummy rod 43 as a closing member has been described as an example. However, in the closing process P2, the opening on one end side of the hole 25 may be at least partially closed, and the closing member is not limited.

According to the present invention, an optical fiber preform capable of efficiently producing an optical fiber is provided, and can be used in various fields related to optical fibers.

## Claims

1. An optical fiber preform comprising:
a clad rod having a hole extending along a longitudinal direction with both ends being opened, and including a clad glass body that constitutes at least a part of a clad in an optical fiber; and
a glass rod including a predetermined glass body that constitutes a predetermined portion different from the clad in the optical fiber, the glass rod being held in the hole,
wherein the hole has a diameter that increases from one end side toward other end side.

2. An optical fiber preform comprising:
a clad rod having a hole extending along a longitudinal direction, and including a clad glass body that constitutes at least a part of a clad in an optical fiber; and
a glass rod including a predetermined glass body that constitutes a predetermined portion different from the clad in the optical fiber, the glass rod being held in the hole,
wherein the hole has a diameter that increases from one end side toward other end side, and
the clad rod includes a first sealing portion welded to the glass rod at an end portion on the other end side thereof to close an end on the other end side of the hole, and a second sealing portion welded to the glass rod at an end portion on the one end side to close an end on the one end side of the hole.

3. The optical fiber preform according to claim 1 or 2, wherein
the diameter of the hole increases from the one end side toward the other end side in a stepwise manner.

4. The optical fiber preform according to claim 1 or 2, wherein
the diameter of the hole gradually increases from the one end side toward the other end side.

5. The optical fiber preform according to claim 1 or 2, wherein
a plurality of glass rods are provided, and
a plurality of holes in which the plurality of glass rods are individually held are provided in the clad rod.
